# EUROPÄISCHE PATENTANMELDUNG

(11) **EP 1 193 466 A2**
(43) Veröffentlichungstag der Anmeldung: **03.04.2002**
(21) Anmeldenummer: 01117594.0
(22) Anmeldetag: 20.07.2001
(51) Int. Cl.: G01B 9/02, G01D 5/353

(54) **Interferometrische Messanordnung zum Überlagern von mindestens zwei Lichtwellen**

(30) Priorität: 21.07.2000 DE 10035835
(71) Anmelder: Medizinisches Laserzentrum Lübeck GmbH, D-23562 Lübeck (DE)
(72) Erfinder: Koch, Peter, 23558 Lübeck (DE); Engelhardt, Ralf, 23568 Lübeck (DE); Scholz, Christian, 22844 Norderstedt (DE)
(74) Vertreter: Vollmann, Heiko, Dipl.-Ing.

(57) **Zusammenfassung**

Es handelt sich um eine interferometrische Messanordnung zum Überlagern von mindestens zwei Lichtwellen mit einer ersten Koppeleinrichtung (3) zum Einkoppeln der von einer Lichtquelle (1) kommenden Lichtwellen in einen Probenarm (6, 7) und in einen Referenzarm (4) und mit einer zweiten Koppeleinrichtung (5) zum Überlagern der vom Referenzarm (4) und vom Probenarm (7) kommenden Lichtwellen, die zu mindestens einem Detektor (10, 11) geführt werden. Die Lichtwellen werden zumindest innerhalb des Referenzarms (4) ausschließlich in einem Faserleiter geführt, den sie auf ihrem Weg zwischen den Koppeleinrichtungen (3, 5) nicht verlassen.

## Beschreibung

Die Erfindung betrifft eine interferometrische Messanordnung gemäß den im Oberbegriff des Anspruchs 1 angegebenen Merkmalen.

Derartige Messanordnungen werden auf zahlreichen technischen Gebieten eingesetzt. Das von einer Lichtquelle ausgehende Licht wird dabei in einen Probenarm und einen Referenzarm aufgeteilt, wobei die Lichtwellen beider Arme wieder zusammengeführt und einer Detektionseinrichtung zugeführt werden, urn die sich dann ggf. ergebenden Interferenzen zu erfassen.

Dabei unterscheidet man grundsätzlich zwei Interferometertypen, nämlich die Faserinterferometer, bei denen die Lichtwellen in Faserleitern geführt sind, und die, bei denen die Lichtwellen frei im Raum geführt sind. Letztere haben sich zwar im Versuchsaufbau bewährt, haben jedoch insbesondere in rauen Umgebungsbedingungen ihre Grenzen, da sie anfällig gegen äußere Einflüsse sind. Insofern günstiger sind Faserinterferometer, bei denen die Lichtwellen weitgehend in Faserleitern geführt sind, die quasi als in sich geschlossene Systeme aufgebaut werden können.

Bei den Faserinterferometern hat sich das Michelson-Interferometer als Standard durchgesetzt, bei dem die Lichtwellen ausgehend von einer Lichtquelle einer Koppeleinrichtung zugeführt werden, in der diese einem Referenzarm einerseits und einem Probenarm andererseits zugeführt werden. Die in diesen beiden Armen zurückgeführten Lichtwellen gelangen wiederum in die Koppeleinrichtung und zurück einerseits zur Lichtquelle und andererseits zu einem Detektor, wo die Signalerfassung und Umwandlung in ein elektrisches Signal erfolgt.

Neben dem Michelson-Interferometer ist auch das Mach-Zehnder-Interferometer verbreitet. Ein solches wird beispielsweise in der aus DE 691 15 477 T2 bekannten Vorrichtung eingesetzt. Das dort verwendete Interferometer führt die von der Lichtquelle kommenden Lichtwellen einer ersten Koppeleinrichtung zu, in der die Lichtwellen in einen Probenarm und in einen Referenzarm eingeleitet werden. Innerhalb des Probenarms ist ein Strahlteiler vorgesehen, der einen Teil der Lichtwellen direkt zu einer zweiten Koppeleinrichtung weiterleitet, in der die weitergeleiteten Lichtwellen mit denen des Referenzarms überlagert und Detekionsvorrichtungen zugeführt werden. Diese Anordnung entspricht einem Mach-Zehnder-Interferometer, wie sie in der faseroptischen Meßtechnik üblich ist. Diese Anordnung dient ausschließlich zur Messung der Weglänge der Lichtwellen, die den Probenarm zwischen den Koppeleinrichtungen durchlaufen haben. Die Lichtwellen, die über den Strahlteiler auf die Probe gelangen und von dieser reflektiert werden, werden im Probenarm zurück zur ersten Koppeleinrichtung geführt und dort separat einem Detektor zugeführt. Die weitere Auswertung der erfaßten Signale erfolgt dann in vergleichsweise aufwändiger Weise elektronisch.

Allen Faserinterferometern gemeinsam ist der vergleichsweise schlechte Wirkungsgrad, da maximal 50 % des von der Lichtquelle in das System eingespeisten Lichtes am Detektor ankommt. In der Praxis ist dieser Wert noch deutlich geringer, da Einspeisungs- und andere Verluste auftreten. Wenn, was beispielsweise in der optischen Kohärenztomographie üblich ist, die interferometrische Messanordnung durch einen Phasenmodulator erweitert wird, werden die Verluste noch größer, da die dort üblicherweise verwendeten Spiegelanordnungen stets Reflexionsverluste aufweisen und darüber hinaus die Spiegelanordnungen, insbesondere die beweglichen Teile nicht so exakt justierbar sind, dass auch Verluste bei der Rückeinkoppelung entstehen.

Vor diesem Hintergrund liegt der vorliegenden Erfindung die Aufgabe zugrunde, eine gattungsgemäße interferometrische Messanordnung so auszubilden, dass der Wirkungsgrad gesteigert wird. Darüber hinaus soll eine leistungsstarke und einfach aufgebaute interferometrische Messanordnung geschaffen werden, die insbesondere auch einen Phasenmodulator umfassen soll, um beispielsweise in der optischen Kohärenztomographie eingesetzt zu werden.

Diese Aufgabe wird gemäß der Erfndung durch die in Anspruch 1 angegebenen Merkmale gelöst. Vorteilhafte Ausgestaltungen der Erfindung sind in den Unteransprüchen sowie der nachfolgenden Beschreibung angegeben.

Ein wesentlicher Vorteil der erfindungsgemäßen Messanordnung ist, dass 50 % der in der ersten Koppeleinrichtung eingekoppelten, von der Lichtquelle kommenden Lichtwellen direkt in den Referenzarm gelangen und diesen ohne Richtungsumkehr am Ende verlassen, d. h. in die zweite Koppeleinrichtung gelangen. Die verbleibenden 50 % der von der Lichtquelle erzeugten Lichtwellen, die in den Probenarm gelangen, werden durch Richtungsumkehr durch die erste Koppeleinrichtung und von da über einen Faserleiter zur zweiten Koppeleinrichtung geleitet. Bei dieser Anordnung gelangen bis zu 75 % der von der Lichtquelle in die Anordnung eingespeisten Lichtwellen zu der Detektoreinrichtung. Die Messanordnung ist somit extrem lichtstark und zudem äußerst robust, da die Lichtwellen weitestgehend in Faserleitern geführt werden können, die diese nahezu verlustfrei und weitgehend unbeeinflusst von Umwelteinflüssen führen.

Die Detektoreinrichtung weist vorzugsweise zwei Detektoren auf, die ausgangsseitig der Koppeleinrichtung vorgesehen sind. Die Anordnung von zwei Detektoren ist insbesondere bei Messanordnungen besonders vorteilhaft, da die aufgrund des in der Koppeleinrichtung bekanntermaßen entstehenden Phasensprungs die den Detektoren zugeführten Lichtwellen phasenversetzt sind, so dass bei entsprechender Beschaltung der Detektoren, wenn nämlich die elektrischen Signale der Detektoren additiv verknüpft werden, ein die Interferenz repräsentierendes Signal entsteht.

Auch der Probenarm kann vollständig durch Faserleiter gebildet sein, wenn das freie Ende des Probenarms endseitig reflektierend ausgebildet ist. Dann erfolgt in der gesamten Messanordnung die Führung über Faserleiter, was zum einen besonders verlustarm ist und zum anderen die Messanordnung weitgehend unempfindlich gegen äußere Einflüsse macht. Eine solche Anordnung kann beispielsweise zu Messzwecken eingesetzt werden, wenn der eine Teil des Probenarms beispielsweise aufgewickelt wird, wie in US 5,029,978, US 5,101,449 oder US 5,493,623 beschrieben ist. Der freie Teil des Probenarms kann beispielsweise mit einem Stab vergossen werden, dessen Längenänderung ermittelt werden soll. Es sind vielfältige Messanordnungen dieser Art denkbar. Dabei ist die interferometrische Messanordnung praktisch hermetisch abgeschlossen, wenn nämlich Referenz- und Probenarm aus Faserleitern bestehen. die im Bereich der Koppeleinrichtungen mit weiteren Faserleitern verbunden sind, wie das bei Koppeleinrichtungen dieser Art allgemein bekannt ist.

Eine vorteilhafte Weiterbildung der erfindungsgemäßen Messanordnung ist dadurch gegeben, dass im Referenz- und/oder Probenarm eine Vorrichtung zum Verändern der Laufstrecke einer Lichtwelle eingegliedert ist, bei der die Lichtwellen ebenfalls ausschließlich in einem Faserleiter geführt sind, beispielsweise so, wie in den vorerwähnten US-Patenten beschrieben. Bevorzugt werden die Faserleiter jeweils auf einen geteilten Kern aufgewickelt, wobei der Abstand der Kernteile zueinander statisch, beispielsweise durch eine Stellschraube, oder dynamisch, beispielsweise durch einen piezoelektrischen Antrieb, verändert und damit eine gezielte Längenänderung der Faserleiter erreicht wird. Auf diese Weise kann die Messanordnung mit einem Phasenmodulator versehen werden, um beispielsweise in der optischen Kohärenztomographie eingesetzt zu werden. wobei die Lichtwellen weitestgehend in Faserleitern geführt sind, so dass eine störungsunanfällige Messanordnung mit hohem Wirkungsgrad geschaffen wird. Dabei werden vorzugsweise zwei derartiger Vorrichtungen zum Verändern der Laufstrecke eingesetzt, und zwar eine in Form eines Phasenmodulators zum dynamischen Verändern der Laufstrecke und eine andere zur Einstellung des Arbeitspunktes, die zweckmäßigerweise im Referenzarm eingegliedert ist.

Ein grundsätzliches Problem bei solchen Vorrichtungen ist die Temperaturempfindlichkeit, da mit sich ändernder Temperatur üblicherweise auch der eingestellte Arbeitspunkt verändert wird. Um dies zu verhindern bzw. die damit verbundenen Effekte weitgehend auszuschalten, sieht die Erfindung vor, beide Vorrichtungen zum Verändern der Laufstrecke, also sowohl im Probenarm als auch im Referenzarm, wärmeleitend miteinander zu verbinden, wobei die Vorrichtungen zweckmäßigerweise so ausgebildet sind, dass sie gleiche optische Laufstrecken in den Faserleitern und entsprechende Wicklungszahlen aufweisen, so dass die temperaturbedingte Längenänderung in beiden Armen gleich ist.

Eine temperaturbedingte Arbeitspunktverschiebung wird dann selbsttätig durch eine entsprechende Verschiebung in dem anderen Arm ausgeglichen.

Die Erfindung ist nachfolgend anhand eines in den Figuren dargestellten Ausführungsbeispiels näher erläutert. Es zeigen:
- Fig. 1: in schematischer Darstellung eine erste interferometrische Messanordnung nach der Erfindung und
- Fig. 2: eine zweite interferometrische Messanordnung nach der Erfindung.

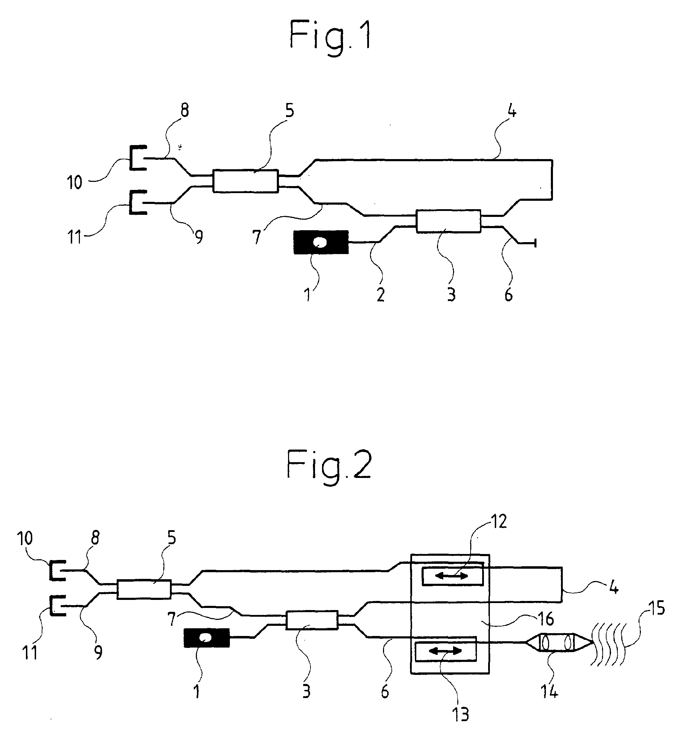

Die anhand von Fig. 1 dargestellte Messanordnung zeigt ein Interferometer in seiner einfachsten Form. Eine Lichtquelle 1 in Form einer Laserdiode sendet Lichtwellen in einen Faserleiter 2, der in eine erste Koppeleinrichtung 3 mündet.

Die von der Lichtquelle 1 ausgehenden Lichtwellen werden in der Koppeleinrichtung 3 einem Faserleiter 4, der zu einer zweiten Koppeleinrichtung 5 führt, sowie einem Faserleiter 6, der an seinem freien Ende verspiegelt ist, zugeführt. Der Faserleiter 4 bildet den Referenzarm des Interferometers, wohingegen der Faserleiter 6 den freien Teil des Probenarms des Interferometers bildet, dessen anderer Teil durch einen Faserleiter 7 gebildet ist, der zwischen der ersten Koppeleinrichtung 3 und der zweiten Koppeleinrichtung 5 verläuft, und zwar in Fortsetzung des Faserleiters 4. Der Ausgang der zweiten Koppeleinrichtung 5 ist über Faserleiter 8 und 9 mit Detektoren 10, 11 verbunden, welche die optischen Signale in elektrische umwandeln, so dass die Signalauswertung in an sich bekannter Weise mittels elektrischer Schaltungen erfolgen kann.

Die vorbeschriebene Anordnung ist von der Lichtquelle 1 bis zu den Detektoren 10, 11 vollständig durch Faserleiter in Form von Quarzfasern gebildet. Sie bildet somit ein geschlossenes System, das weitgehend unabhängig von äußeren Einflüssen arbeitet, da die Lichtwellen die Quarzfasern innerhalb der Messanordnung nicht verlassen. Sie weist einen Wirkungsgrad von bis zu 75 % auf.

Diese Anordnung hat also einen vergleichsweise hohen Wirkungsgrad und ist durch die Führung der Lichtwellen ausschließlich in Lichtleitern sehr unempfindlich gegen äußere Einflüsse wie Staub; Feuchtigkeit und dergleichen.

Bei der Messanordnung nach Fig. 2 ist ein Phasenmodulator integriert. Es handelt sich also um eine interferometrische Messanordnung, wie sie beispielsweise bei der OCT Verwendung findet. Sie unterscheidet sich von der vorbeschriebenen dadurch, dass sowohl im Referenzarm, also in dem Faserleiter 4, als auch im Probenarm, und zwar im Bereich des Teils, der ein freies Ende bildet (Faserleiter 6), oder alternativ im anderen Teil (Faserleiter 7), Vorrichtungen 12, 13 zur Veränderung der Laufstrecke des Lichtes eingegliedert sind. Im Unterschied zu der Anordnung nach Fig. 1 ist jedoch der freie Teil des Probenarms nicht endseitig verspiegelt, sondern an eine Optik 14 angekoppelt, welche die Lichtstrahlen zu einer Probe 15 führt, an der sie reflektiert und durch die Optik 14 zurück in den Probenarm gelangen.

Die Vorrichtungen 12 und 13 stellen jeweils beliebige Anordnungen zu denen der Faserleiter 4 bzw. 6 dar, wobei eine der Vorrichtungen zum Einstellen des Arbeitspunktes und die andere zur dynamischen, d. h. periodischen Längenänderung - sie bildet den eigentlichen Phasenmodulator - vorgesehen ist. Letztere Vorrichtung ist vorteilhaft im Probenzweig angeordnet, da der Probenzweig von den Lichtwellen zweimal (auf dem Weg zur Probe hin und auf dem Rückweg) durchlaufen wird, wodurch sich unabhängig von der Bauart der Vorrichtung stets eine im Vergleich zum Referenzarm doppelte Wegänderung ergibt. Die Vorrichtungen 12 und 13 sind wärmeleitend miteinander verbunden, und zwar über einen Wärmeleiter 16, wodurch die Anordnung im Wesentlichen temperaturunabhängig arbeitet, da temperaturbedingte Längenänderungen in beiden Vorrichtungen 12 und 13 gleichermaßen erfolgen und sich somit kompensieren.

Die nicht im Einzelnen dargestellten Vorrichtungen 12 und 13 sind so ausgebildet, dass die Faserleiter in Form von Quarzfasern 4 und 6 oder alternativ 7 (nicht dargestellt) jeweils über einen geteilten Wicklungskern aufgewickelt sind, wobei der Abstand der Kernteile zueinander veränderbar ist, und zwar bei der Vorrichtung 12 durch ein Stellelement, beispielsweise eine Stellschraube, und bei der Vorrichtung 13 durch einen Antrieb, beispielsweise ein Piezoelement oder ein Stack von Piezoelementen. das die Kernhälften entsprechend der elektrischen Ansteuerung periodisch auseinander drückt, wodurch die Längenänderung erfolgt. Die Kerne sind aus gut wärmeleitendem Material, z. B. Aluminium, und auf einer gemeinsamen Tragplatte 16 montiert, welche die wärmeleitende Verbindung bildet.

Auch bei der in Fig. 2 dargestellten Messanordnung, die mit Ausnahme der Vorrichtungen zur Längenänderung 12, 13 sowie der sich an das freie Ende des Probenzweigs anschließenden Optik 14 identisch zu der anhand von Fig. 1 beschriebenen ausgebildet ist, was auch durch die in Fig. 2 entsprechend verwendeten Bezugszeichen dokumentiert wird, wird das Licht weitgehend in Faserleitern geführt. Insbesondere ist auch im Referenzarm ein Austritt der Lichtwellen aus den Faserleitern nicht vorgesehen. Lediglich ist ein Austritt am freien Ende der Optik 14 erforderlich, der jedoch in einer solchen Messanordnung, bei der eine Probe untersucht werden soll, nicht zu vermeiden ist. Die Optik selbst kann ebenfalls weitgehend gekapselt werden, so dass auch diese Messanordnung äußerst robust und unempfindlich gegen äußere Einflüsse ist und mit einem hohen optischen Wirkungsgrad arbeitet.

### Bezugszeichenliste

- 1 -: Lichtquelle
- 2 -: Faserleiter
- 3 -: erste Koppeleinrichtung
- 4 -: Faserleiter
- 5 -: zweite Koppeleinrichtung
- 6 -: Faserleiter
- 7 -: Faserleiter
- 8 -: Faserleiter
- 9 -: Faserleiter
- 10 -: Detektor
- 11 -: Detektor
- 12 -: Vorrichtung zur Veränderung der Laufstrecke
- 13 -: Vorrichtung zur Veränderung der Laufstrecke
- 14 -: Optik
- 15 -: Probe
- 16 -: Wärmeleiter

## Patentansprüche

1. Interferometrische Messanordnung zum Überlagern von mindestens zwei Lichtwellen, mit einer ersten Koppeleinrichtung (3) zum Einkoppeln der von einer Lichtquelle (1) kommenden Lichtwellen in einen Probenarm (6) und in einen Referenzarm (4) und mit einer zweiten Koppeleinrichtung (5) zum Überlagern der Lichtwellen, die den Referenzarm (4) durchlaufen haben mit den Lichtwellen, die den Probenarm (6, 7) durchlaufen haben, bei der die überlagerten Lichtwellen mindestens einem Detektor (10, 11) zugeführt sind und die Lichtwellen mindestens innerhalb des Referenzarms (4) ausschließlich in mindestens einem Faserleiter (4) geführt sind, den sie auf ihrem Weg zwischen den Koppeleinrichtungen (3, 5) nicht verlassen, und bei der sich der Probenarm (6, 7) zu beiden Seiten der ersten Koppeleinrichtung (3) erstreckt.

2. Messanordnung nach einem der vorhergehenden Ansprüche, **dadurch gekennzeichnet, dass** der Probenarm (6, 7) ausschließlich einen endseitig reflektierend ausgebildeten Faserleiter (6) aufweist.

3. Messanordnung nach einem der vorhergehenden Ansprüche, **dadurch gekennzeichnet, dass** im Referenz- und/oder Probenarm (4, 6, 7) eine Vorrichtung (12, 13) zum Verändern der Laufstrecke einer Lichtwelle eingegliedert ist. bei der die Lichtwellen in einem Faserleiter (4, 6) geführt sind.

4. Messanordnung nach einem der vorhergehenden Ansprüche, **dadurch gekennzeichnet, dass** sowohl im Probenarm (6, 7) als auch im Referenzarm (4) je eine Vorrichtung (12, 13) zum Verändern der Laufstrecke einer Lichtwelle eingegliedert sind, wobei beide Vorrichtungen wärmeleitend (16) miteinander verbunden sind.

5. Messanordnung nach einem der vorhergehenden Ansprüche, **dadurch gekennzeichnet, dass** eine Vorrichtung (13) zum Verändern der Laufstrecke einer Lichtwelle Teil eines Phasenmodulators bildet und die andere Vorrichtung (13) zum Verändern der Laufstrecke einer Lichtwelle zur Einstellung des Arbeitspunktes verwendet wird.
